# DEMANDE DE BREVET EUROPEEN

(11) **EP 3 993 309 A1**
(43) Date de publication de la demande: **04.05.2022**
(21) Numéro de dépôt: 21203869.9
(22) Date de dépôt: 21.10.2021
(51) Int. Cl.: H04L 9/06, H04L 9/08, H04L 9/12, H04L 9/16, H04L 29/06, H04W 12/00

(54) **DISPOSITIF ET PROCÉDÉ DE TRAITEMENT D'UN MESSAGE ET D'ÉMISSION DE MESSAGE LPWAN**

(30) Priorité: 28.10.2020 FR 2011057
(71) Demandeur: Idemia Identity & Security France, 92400 Courbevoie (FR)
(72) Inventeur: THERENE, Eric, 92400 COURBEVOIE (FR); NEROT, Sébastien, 92400 COURBEVOIE (FR); FONTENEAU, Anthony, 92400 COURBEVOIE (FR)
(74) Mandataire: Cabinet Beau de Loménie

(57) **Abrégé**

Dispositif et procédé de traitement d'un message et d'émission de message LPWAN Procédé de traitement d'un message reçu mis en œuvre par un dispositif électronique, le message comprenant des données chiffrées et au moins un élément indicateur (CT0), le procédé comprenant :
- une élaboration (B207, A307) d'un indicateur complet (CT) à partir de données mémorisées dans le dispositif électronique et de l'élément indicateur reçu,
- une élaboration (B208, A308) d'une clé à partir de l'indicateur complet,
- un déchiffrement (B209, A309) desdites données chiffrées utilisant ladite clé.

L'invention concerne également un procédé d'émission correspondant.

## Description

### Domaine Technique

L'invention se rapport au domaine général de la communication entre des dispositifs électroniques et des serveurs.

L'invention s'applique en particulier et de façon non limitative à la communication de messages par des liaisons sans fil à faible consommation énergétique. Ces liaisons sont généralement désignées par l'acronyme anglo-saxon LPWAN (« Low-Power Wide-Area Network »).

### Technique antérieure

Les mécanismes de sécurisation des échanges entre des dispositifs électroniques et des serveurs utilisent généralement des échanges préalables de plusieurs informations (données aléatoires, données aléatoires signées, etc.). Ceci permet de sécuriser les communications ultérieures entre un serveur et un dispositif électronique, par chiffrement sur la base de clés.

Dans le contexte de « l'internet des objets » (« IOT : Internet Of Things » en anglais) et des communications LPWAN, la bande passante disponible est trop faible pour permettre ces multiples échanges de messages. Par exemple, certains dispositifs ne peuvent émettre qu'un seul message par jour ou un seul message toutes les heures.

Il est donc très compliqué, dans ce contexte, d'échanger des messages qui vont permettre la sécurisation ultérieure des communications : on préfère n'envoyer que des informations utiles, à communiquer (typiquement des commandes).

Il existe néanmoins un besoin fort pour une sécurisation des communications entre des dispositifs électroniques mobiles (par exemple des dispositifs de l'internet des objets) et des serveurs.

Il a été proposé d'utiliser des clés fixes mémorisées du côté du serveur et du côté du dispositif électronique mobile : cette solution n'est pas satisfaisante en ce qui concerne la sécurité des échanges. En effet, une récupération des clés par un tiers non autorisé compromet la sécurisation de ces échanges.

L'invention vise notamment à palier certains de ces inconvénients, et en particulier à sécuriser les communications entre des dispositifs électroniques mobiles et des serveurs en rendant dynamique et éphémère la gestion des clés.

### Objet et résumé de l'invention

La présente invention répond à ce besoin en proposant un procédé de réception d'un message mis en œuvre par un dispositif électronique, le message comprenant des données chiffrées et au moins un élément indicateur, le procédé comprenant :
- une élaboration d'un indicateur complet à partir de données mémorisées dans le dispositif électronique et de l'élément indicateur reçu,
- une élaboration d'une clé à partir d'au moins l'indicateur complet,
- un déchiffrement desdites données chiffrées utilisant ladite clé.

Ainsi, c'est directement dans le message que l'on place une information qui va être utilisée pour élaborer une clé. Cette clé est une clé de déchiffrement.

L'élaboration de la clé à partir de l'indicateur complet peut être une étape de dérivation de clé connue en soi.

Aussi, l'élément indicateur peut être une portion de l'indicateur complet, par exemple une portion des bits de cet indicateur complet.

De manière alternative, l'élément indicateur peut être un élément qui permet, par application d'une fonction, d'obtenir l'indicateur complet. Cette fonction utilise en outre les données mémorisées dans le dispositif électronique.

L'invention permet donc de sécuriser une communication d'information en utilisant un même message pour ces informations et pour les informations de sécurité qui vont permettent le déchiffrement du message (ces informations de sécurité comprennent l'élément indicateur).

On peut noter que le message peut avoir une structure de trame (par exemple compatible avec un protocole ou une norme existante) avec une partie comprenant les données chiffrées et une autre partie comprenant l'élément indicateur.

L'élaboration de la clé n'est pas limitée à l'utilisation du seul indicateur complet et peut comporter l'utilisation d'autres éléments, par exemple un identifiant (éventuellement d'un élément sécurisé présent sein du dispositif électronique) du dispositif électronique ou bien le vecteur de base du dispositif électronique pour les aspects d'authentification (appelé graine (« seed » en anglais)).

Selon un mode de mise en œuvre particulier, ledit élément indicateur reçu est dans une portion non-chiffrée du message.

Selon un mode de mise en œuvre particulier, ledit élément indicateur reçu est dans un en-tête non-chiffré du message reçu.

Les en-têtes de message peuvent ne pas être chiffrés et sont donc bien adaptés à contenir l'élément indicateur.

L'homme du métier saura choisir le format du message (par exemple la trame) pour que ce message comporte un en-tête non-chiffré adapté à recevoir l'élément de l'indicateur.

Selon un mode de mise en œuvre particulier, si le déchiffrement ne délivre pas les données chiffrées déchiffrées en clair lorsque l'on utilise l'élément indicateur reçu, on détermine une autre valeur d'élément indicateur choisie dans un groupe de valeurs prédéterminées d'élément indicateur, et on utilise cette valeur choisie pour mettre en œuvre l'élaboration de l'indicateur complet.

Ce mode de mise en œuvre particulier permet de s'assurer que les données chiffrées seront bien déchiffrées. En effet, dans la mesure où les données mémorisées sont correctes, il est envisageable d'accepter plusieurs valeurs possibles d'éléments indicateur.

La personne du métier saura identifier que les données chiffrées ont été valablement déchiffrées et qu'elles sont en clair. Par exemple, les données chiffrées sont en clair si elles sont dans un format exploitable ou attendu, éventuellement pour un traitement ultérieur.

Selon un mode de mise en œuvre particulier, l'indicateur complet est un compteur de messages envoyés et reçus pouvant être inscrit sur M+N bits, M et N étant des entiers non-nuls,
l'élément indicateur reçu étant une portion de N bits consécutifs,
les données mémorisées comprenant au moins une portion de M bits consécutifs,
l'élaboration de l'indicateur complet comprenant une concaténation binaire de ladite portion de M bits consécutifs avec ladite portion de N bits consécutifs, ladite portion de N bits consécutifs formant les bits de poids faible de l'indicateur complet.

L'utilisation d'un compteur de messages envoyés et reçus permet de suivre les échanges successifs. On peut ainsi dériver des clés qui sont toutes associées à un message respectif.

En ne transmettant qu'une portion de N bits consécutifs, on limite la quantité d'informations échangées, et donc on préserve la bande passante.

Ce mode de mise en œuvre particulier permet en outre au dispositif électronique de tester une pluralité de possibilités d'éléments indicateur (2^{N}-1 possibilités) pour élaborer l'indicateur complet.

Ainsi, ce mode de mise en œuvre particulier est particulièrement robuste.

Selon un mode de mise en œuvre particulier, le groupe de valeurs prédéterminées d'élément indicateur comporte les 2^{N}-1 valeurs possibles pouvant s'écrire sur N bits.

On pourra choisir la valeur de N pour privilégier soit la bande passante, soit la sécurité du déchiffrement.

Selon un mode de mise en œuvre particulier, les données mémorisées comprennent ladite portion de M bits consécutifs, indiquant une valeur A, et une portion de N bits consécutifs, indiquant une valeur B,
ladite portion de N bits consécutifs de l'élément indicateur reçu indiquant une valeur Y,
et dans lequel si Y est strictement supérieur à B alors l'élaboration de l'indicateur complet comprend la concaténation binaire de A et Y (c'est-à-dire la concaténation des M bits consécutifs qui indiquent la valeur A avec les N bits consécutifs qui indiquent la valeur Y) et la mémorisation de l'indicateur complet obtenu (par exemple sous forme binaire),
sinon, l'élaboration de l'indicateur complet comprend la concaténation de A+1 et de Y.

Préférentiellement, le compteur est le même du côté de l'émetteur du message et du côté du dispositif électronique qui reçoit le message.

Ce mode de mise en œuvre particulier permet de mettre à jour le compteur pour le dispositif électronique.

On notera que la concaténation binaire de valeurs vise à former une valeur en plaçant consécutivement les bits des deux valeurs à concaténer.

Selon un mode de mise en œuvre particulier, on mémorise en tant que nouvelles données mémorisées l'indicateur complet obtenu.

En mémorisant en tant que nouvelles données mémorisées l'indicateur complet obtenu, on permet sa réutilisation pour par exemple l'envoi ultérieur d'un message ou le traitement d'un prochain message à recevoir.

Selon un mode de mise en œuvre particulier, le procédé comprend la réception dudit message par une liaison sans fil à faible consommation énergétique.

Par exemple, la liaison sans fil à faible consommation énergétique peut être une liaison LPWAN, par exemple de type dite « Sigfox », du nom de la société dont les solutions sont basées sur une transmission de signaux utilisant une bande spectrale ultra étroite (ou « UNB » pour « Ultra NarrowBand » en anglais), ou bien, par exemple, de type dite LoRaWAN (pour « Long Range Radio Wide Area Network » en anglais) dont la technologie de transmission repose plutôt sur un étalement spectrale des signaux, de type dite LTE-M (pour « Long Term Evolution for Machine » en anglais) ou bien encore de type dite NB-loT (pour « NarrowBand Internet Of Things » en anglais).

Ces liaisons sans fil à faible consommation énergétique sont des exemples de communications longue portée, à débit de données plutôt faible, pour lesquelles le procédé selon l'invention est particulièrement bien adapté, car il favorise cette faible consommation tout en maintenant un bon niveau de sécurité.

L'invention n'est néanmoins nullement limitée aux liaisons sans fil à faible consommation énergétique mais peut s'appliquer à tout type de liaisons sans fil, par exemple destinées à des communications courte portée. On peut citer par exemple et de façon non limitative, les liaisons WIFI (pour « Wireless Fidelity » en anglais), Bluetooth, RFID (pour « Radio Frequency Identification » en anglais), ZigBee, NFC (pour « Near Field Communication » en anglais).

Par ailleurs, d'autre types de protocoles, sans fil, comme par exemple le GSM (pour « Global System for Mobile Communication » en anglais), la LTE (pour « Long Term Evolution » en anglais) ou la 5G (correspondant à la cinquième génération des standards pour les communications mobiles), ou filaires, peuvent être utilisés pour recevoir des messages du procédé tel que défini ci-avant.

Le procédé étant indépendant par rapport aux porteuses de transport (« transport bearer » en anglais) véhiculant les messages qui sont reçu dans le procédé, il est donc applicable à plusieurs types de standards ou technologies, comme par exemple, ceux cités ci-avant.

L'invention concerne également un procédé d'émission d'un message mis en œuvre par un dispositif électronique, le procédé comprenant :
- une détermination d'un indicateur complet,
- une élaboration d'une clé à partir d'au moins l'indicateur complet,
- une élaboration d'un élément indicateur à partir de l'indicateur complet,
- un chiffrement de données utilisant ladite clé pour obtenir des données chiffrées,
dans lequel le message à émettre comprend ledit élément indicateur et lesdites données chiffrées.

Le procédé peut comporter l'émission du message à émettre.

Dans ce procédé, on élabore un message qui peut être reçu en mettant en œuvre le procédé tel que décrit ci-avant.

Ce procédé d'émission peut être configuré pour émettre des messages compatibles avec tous les exemples de procédé de traitement d'un message tel que décrit ci-avant.

Selon un mode de mise en œuvre particulier, ledit élément indicateur est placé dans une portion non-chiffrée du message à émettre.

Selon un mode de mise en œuvre particulier, ledit élément indicateur est placé dans un en-tête non-chiffré du message à émettre.

Selon un mode particulier de mise en œuvre, la détermination de l'indicateur complet comporte une mise à jour d'un indicateur complet mémorisé dans le dispositif électronique.

Ce mode de mise en œuvre particulier permet de s'assurer que le dispositif électronique pourra traiter un message reçu ultérieurement ou encore émettre un nouveau message qui pourra être facilement déchiffré par le dispositif destiné à recevoir ce message.

Selon un mode particulier de mise en œuvre, l'indicateur complet est un compteur de messages envoyés et reçus pouvant être inscrit sur M+N bits, M et N étant des entiers non-nuls,
l'indicateur complet comprenant, sous la forme d'une concaténation binaire, une portion de M bits consécutifs et une portion de N bits consécutifs, ladite portion de N bits consécutifs formant les bits de poids faible de l'indicateur complet et ledit élément indicateur.

Selon un mode particulier de mise en œuvre, le message est émis par une liaison sans fil à faible consommation énergétique.

L'invention propose également un dispositif électronique de réception d'un message comprenant :
- un module de réception d'un message comprenant des données chiffrées et au moins un élément indicateur,
- un module d'élaboration d'un indicateur complet à partir de données mémorisées dans le dispositif électronique et de l'élément indicateur reçu,
- un module d'élaboration d'une clé à partir d'au moins l'indicateur complet,
- un module de déchiffrement desdites données chiffrées.

Ce dispositif électronique peut être configuré pour la mise en œuvre de tous les modes de mise en œuvre du procédé de traitement d'un message tel que décrit ci-avant.

Selon un mode de réalisation particulier, le dispositif électronique comprend un serveur ou un dispositif électronique mobile.

L'invention propose également un système électronique d'émission d'un message comprenant :
- un module de détermination d'un indicateur complet,
- un module d'élaboration d'une clé à partir d'au moins l'indicateur complet,
- un module d'élaboration d'un élément indicateur à partir de l'indicateur complet,
- un module de chiffrement de données utilisant ladite clé pour obtenir des données chiffrées,
- un module d'élaboration du message à émettre, le message à émettre comprenant ledit élément indicateur et lesdites données chiffrées.
- un module d'émission du message à émettre.

Ce système électronique peut être configuré pour la mise en œuvre de chacun des modes de mise en œuvre du procédé d'émission tel que décrit ci-avant.

Selon un mode de réalisation particulier, le système électronique comprend un serveur et/ou un dispositif électronique mobile.

Le dispositif électronique mobile peut être un dispositif de l'internet des objets, par exemple un compteur d'eau ou d'électricité, un smartphone, une tablette, un détecteur de fumée, un capteur de température, d'humidité, un détecteur de mouvement, des trackers industriels/de déplacements, une machine à café, un réfrigérateur, un bracelet, détecteur d'ouverture/fermeture de porte, ...

Le serveur, bien connu par l'homme du métier, peut être un dispositif permettant de fournir et/ou demander des informations et/ou fournir et/ou demander des services au sein d'un réseau, par exemple un serveur d'applications ou bien un serveur de données, au sein d'un réseau, par exemple, réseau informatique, réseau de radio télécommunications, réseau de l'internet des objets.

Le système électronique peut donc comporter un ensemble d'objets ayant la capacité d'être connectés, entre eux et/ou à un ou des réseaux, de pouvoir capter et/ou mesurer et/ou stocker et/ou transmettent et/ou recevoir des données vers et/ou depuis d'autres objets et/ou serveurs.

L'invention propose également un programme d'ordinateur comportant des instructions pour l'exécution des étapes d'un procédé de réception d'un message tel que défini ci-avant lorsque ledit programme est exécuté par un ordinateur.

L'invention propose également un programme d'ordinateur comportant des instructions pour l'exécution des étapes d'un procédé d'émission d'un message tel que défini ci-avant lorsque ledit programme est exécuté par un ordinateur.

A noter que les programme d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de traitement d'un message tel que défini ci-avant.

L'invention propose également un support d'enregistrement lisible par un ordinateur sur lequel est enregistré un programme d'ordinateur comprenant des instructions pour l'exécution des étapes d'un procédé d'émission tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple dépourvu de tous caractères limitatifs.

Sur les figures :
[Fig. 1] La figure 1 représente un exemple de message selon l'invention.
[Fig. 2] La figure 2 représente d'autres exemples de messages selon l'invention.
[Fig. 3] La figure 3 représente l'émission d'un message par un serveur et sa réception par un dispositif électronique mobile.
[Fig. 4] La figure 4 représente l'émission par un dispositif électronique mobile d'un message et sa réception par un serveur.
[Fig.5] La figure 5 représente un dispositif électronique de réception d'un message.
[Fig. 6] La figure 6 représente un dispositif électronique d'émission d'un message.

### Description détaillée d'un mode de réalisation

On va maintenant décrire un exemple de réalisation de l'invention dans lequel on utilise un indicateur complet de type compteur.

Il convient de noter que l'invention s'applique à tout indicateur complet. En d'autres termes, elle s'applique à toute valeur qui peut être élaborée à partir d'un élément indicateur, un élément indicateur pouvant être une valeur qui occupe un espace de mémoire inférieur à celui de l'indicateur complet, typiquement qui occupe un nombre de bits inférieur.

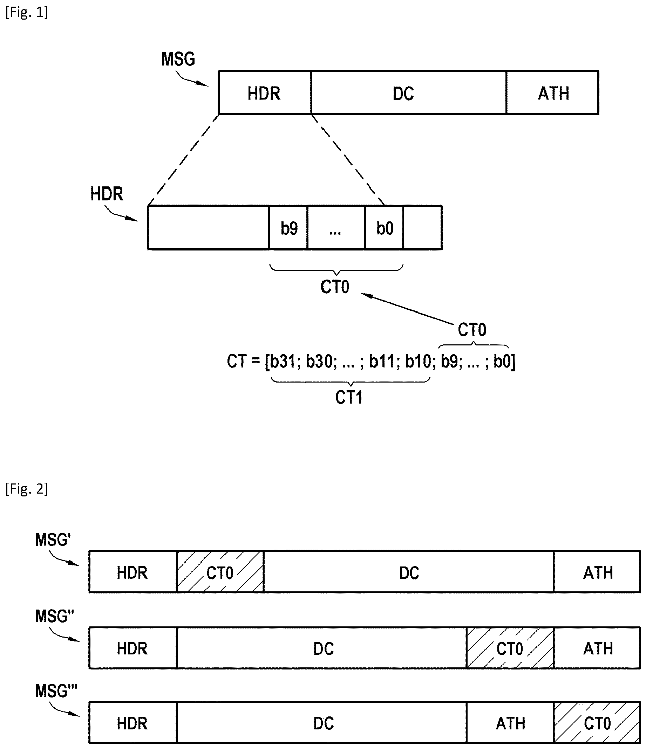

Sur la figure 1, on a représenté la structure d'un message MSG. Cette structure peut être désignée par l'homme du métier comme une trame. Cette trame peut être une trame telle que définie dans les normes LoRaWAN, LTE-M, NB-loT ou bien encore dans les trames telles que formatées pour le réseau « Sigfox ».

En particulier, la trame du message MSG est une trame d'une norme permettant la communication par liaison sans fil à faible consommation énergétique (LPWAN).

Le message MSG comporte un en-tête HDR, des données chiffrées DC (traditionnellement désignées par le terme anglo-saxon payload), et un code d'identification ATH (par exemple un code d'authentification de message « MAC : Message Authentification Code » en anglais).

Dans l'en-tête, on trouve des informations relatives au protocole utilisé, des informations relatives au canal de communication utilisé, et d'autres informations. En particulier, on trouve dans l'en-tête un élément indicateur CT0. L'élément indicateur CT0 comprend les bits de poids le plus faible d'un compteur CT qui peut s'écrire sur 32 bits avec ses 22 bits de poids le plus fort D31 à D10 (portion notée CT1), et ses 10 bits de poids le plus faible B9 à B0 (portion notée CT0).

Dès lors, on comprend qu'il existe 1 024 valeurs possibles pour l'élément indicateur CT0. La connaissance de la portion de poids le plus fort CT1 du compteur CT est donc nécessaire pour pouvoir déterminer facilement la valeur du compteur complet CT, ou éventuellement en essayant les 1 024 possibilités pour l'élément indicateur CT0.

On notera également que l'élément indicateur CT0 seul ne permet pas de déterminer facilement la valeur du compteur CT.

Dans des variantes de réalisation, présentées en figure 2 qui montre des messages MSG', MSG", et MSG"', l'élément indicateur CT0 est placé dans ces figures en différents emplacements au sein du message, hors en-tête, et hors partie chiffrée du message.

En fait, l'élément indicateur CT0 est préférentiellement placé dans une partie non-chiffrée du message.

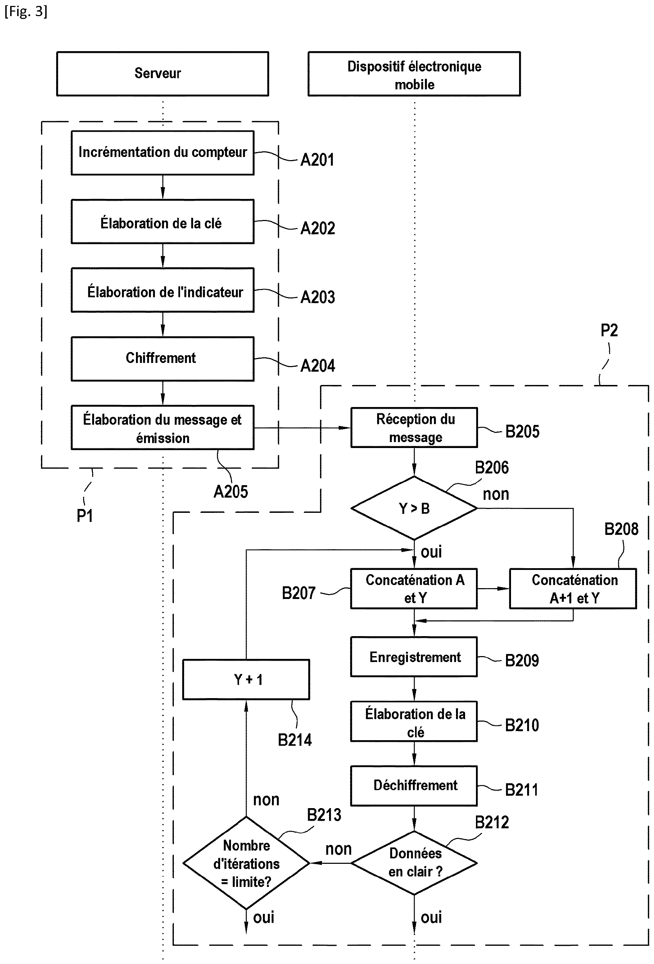

Sur la figure 3, on a représenté un premier procédé P1 d'émission d'un message, et un deuxième procédé P2 de réception du même message.

Le procédé P1 est mis en œuvre par un serveur, tandis que le procédé P2 est mis en œuvre par un dispositif électronique mobile. Par exemple, le serveur peut être un serveur qui communique avec une liaison sans fil à faible consommation énergétique (éventuellement de manière indirecte) avec un dispositif électronique mobile de type internet des objets. La communication entre le serveur et le dispositif électronique utilise donc très peu de bande passante, et les messages échangés entre le serveur et le dispositif électronique mobile peuvent être journaliers.

Dans le serveur, un compteur de message complet a été mémorisé préalablement. Ce compteur peut être analogue au compteur CT tel que décrit en référence à la figure 1. Dans le procédé P1, on va envoyer un nouveau message, dès lors, on met en œuvre l'étape A201 dans laquelle on détermine une nouvelle valeur pour le compteur en incrémentant sa valeur. A l'étape A201, le compteur prend donc pour valeur son ancienne valeur à laquelle on a ajouté la valeur 1.

Si la valeur associée audit bits de poids le plus faible du compteur du serveur est inférieure strictement à 1 024, alors les 22 bits de poids le plus fort ne doivent pas être modifiées lors de l'incrémentation.

Avec le compteur, on peut mettre en œuvre l'étape A202 d'élaboration d'une clé. L'élaboration de la clé utilise le compteur, des informations propres au dispositif électronique (par exemple l'identifiant d'un élément sécurisé présent sein du dispositif électronique ou bien le vecteur de base pour les aspects d'authentification (appelé graine (« seed » en anglais) et bien connue de l'homme du métier)) qui est destiné à recevoir le message, et une clé maître qui peut être partagée entre le dispositif électronique mobile et le serveur.

L'élaboration de la clé peut utiliser des algorithmes cryptographiques tels que l'algorithme AES 128 (bien connu de l'homme du métier). D'autres algorithmes peuvent également être utilisés.

A l'étape A203, on élabore un élément indicateur qui est ici une portion du compteur déterminé à l'étape A201. Dans le mode de mise en œuvre illustré, on va récupérer les 10 bits de poids le plus faible du compteur élaboré à l'étape A201. On obtient ainsi une portion telle que la portion CT0 décrite en référence à la figure 1.

Bien entendu, l'invention n'est pas limitée à des éléments indicateurs utilisant 10 bits, l'homme du métier pourra adapter le nombre de bits en fonction de l'application. De même, le nombre total de bits composant la valeur du compteur peut être différente de 32 bits (valeur purement illustrative).

On peut ensuite mettre en œuvre l'étape A204 dans laquelle on chiffre des données à envoyer en utilisant la clé qui a été élaboré à l'étape A202. Le chiffrement des données peut utiliser un algorithme cryptographique tel que, par exemple, l'algorithme AES 128, ou bien l'algorithme AES GCM (pour « Advanced Encryption Standard Galois/Counter Mode » en anglais).

On peut ensuite mettre en œuvre l'étape A205 dans laquelle on élabore un message dans une structure telle que celle décrite sur la figure 1 en utilisant les données chiffrées de l'étape A204 et l'élément indicateur obtenu à l'étape A203. On peut alors envoyer le message au dispositif électronique mobile, en utilisant une liaison sans fil à faible consommation énergétique.

Le message est reçu par le dispositif électronique mobile à l'étape B205, qui est la première étape du procédé P2 de réception d'un message. On peut noter qu'une valeur de compteur a déjà été stockée dans le dispositif électronique mobile. Pour traiter le message reçu, on va mettre en œuvre une étape de vérification de la valeur du compteur mémorisé (étape B206).

Dans ce qui suit, on note A la portion de bits de poids fort du compteur mémorisé dans le dispositif électronique mobile, et on note B la portion de 10 bits de poids faible du compteur mémorisé dans le dispositif électronique mobile. On note Y l'élément indicateur reçu dans le message qui a été reçu à l'étape B205.

Dans l'étape B206, on vérifie si Y est strictement supérieur à B, et si Y est strictement supérieur à B alors on utilise comme valeur de compteur la valeur formée par A et Y concaténée binairement (étape B207). En fait, si Y est strictement supérieur à B cela signifie que le message reçu a été élaboré postérieurement au dernier message reçu ou émis par le dispositif électronique mobile. On fait ici l'hypothèse qu'il existe des échanges de message qui n'ont pas été traité par le dispositif électronique mobile alors qu'ils l'ont été du côté du serveur (typiquement s'ils ont été émis mais pas reçus).

Si Y est inférieur ou égal à B, alors on utilise comme valeur de compteur A+1 et Y concaténés binairement ensemble (étape B208). Ici, la valeur des 10 bits de poids le plus faible de Y, c'est-à-dire dans le serveur, a dépassé 1 024 alors que tel n'était pas le cas dans le compteur mémorisé dans le dispositif électronique mobile.

On enregistre, à l'étape B209, la nouvelle valeur du compteur élaborée à l'étape B207 ou B208, suivant le cas de figure dans le dispositif électronique mobile, ou plus précisément dans une mémoire non volatile du dispositif électronique mobile.

A l'étape B210, on met en œuvre une élaboration de clé de manière analogue à l'étape A202 décrite ci-avant, et on utilise ici des informations propres au dispositif électronique mobile (par exemple l'identifiant de l'élément sécurisé ou bien le vecteur de base pour les aspects d'authentification (appelé graine (« seed » en anglais) et bien connue de l'homme du métier) mémorisées dans un élément sécurisé du dispositif électronique mobile. Par élément sécurisé nous entendons un dispositif électronique assurant une enclave sécurisée régie, par exemple, sous les exigences des spécifications du groupement GlobalPlatform (par exemple le document « GlobalPlatform Technology Card Spécification » dans sa version 2.3.1 et/ou pouvant aussi répondre aux éxigences du standard ISO7816 ou à la norme critères communs.

A l'étape B211, on met en œuvre un déchiffrement des données chiffrées. Ce déchiffrement des données chiffrées utilise la clé élaborée à l'étape B210.

Ensuite, on met en œuvre l'étape B212 dans laquelle on vérifie si le déchiffrement a délivré les données chiffrées déchiffrées en clair. L'homme du métier saura déterminer si le les données sont en clair, par exemple en vérifiant si une commande attendue se trouve dans les données en clair ou bien si le résultat obtenu correspond à un format de données exploitable ou attendu.

Une obtention d'autre chose que les données chiffrées déchiffrées en clair peut être associée à une valeur de compteur qui n'est pas correcte. Une boucle est alors mise en place.

Cette boucle comporte tout d'abord un test de sortie (étape B213) dans lequel on vérifie si le nombre d'itérations a atteint un nombre limite d'itérations. En fait, si le message a été reçu avec une valeur Y ne permettant nullement de mettre en œ uvre un déchiffrement, on peut tester toutes ou une partie des valeurs possibles avec les 10 bits de poids le plus faible du compteur que l'on souhaite vérifier. Ces 10 bits donnent donc la valeur maximale du nombre limite d'itérations, et ici il y a donc 1024 valeurs potentielles pouvant être prise par les 10 bits de poids le plus faible du compteur.

Si l'on a atteint le nombre limite d'itérations, ceci peut conduire à la mise en place d'une mise à jour de la valeur du compteur sauvegardée au sein du dispositif électronique et/ou du serveur et/ou d'une réinitialisation de la valeur du compteur. Cela peut aussi conduire à une mise à jour du vecteur de base d'authentification. Enfin, cela peut conduire à la génération d'un signal ou d'un message d'erreur. À ce stade, le procédé peut se terminer et les données n'ont pas été obtenues en clair. Il n'est par exemple pas possible de les traiter ultérieurement.

Si par contre on n'a pas atteint le nombre limite d'itérations, on peut mettre en œ uvre l'étape B214 dans laquelle on modifie la valeur de Y pour que sa nouvelle valeur soit égale à Y+1.

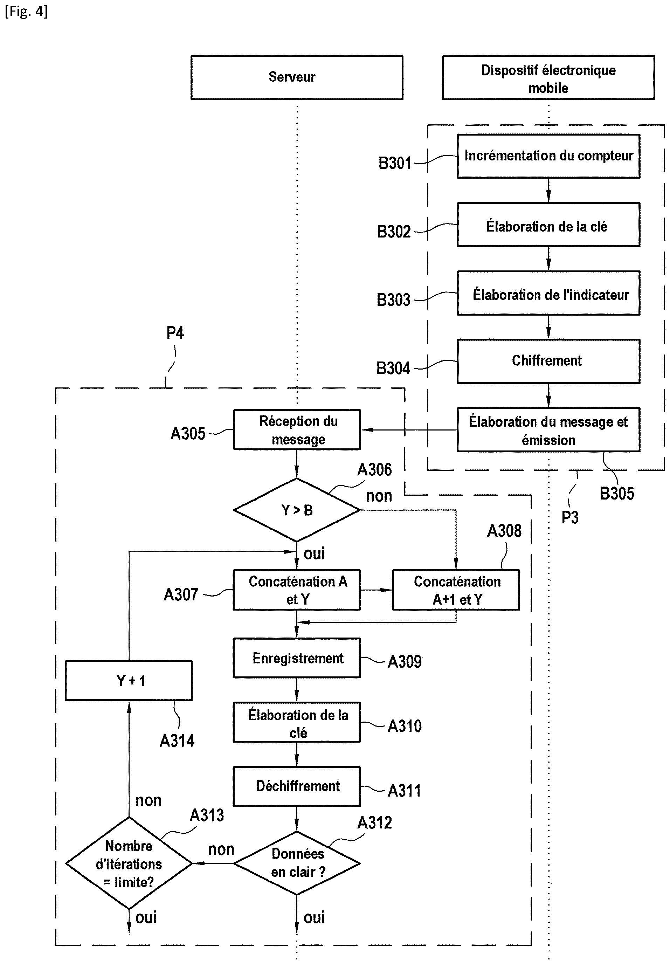

Sur la figure 4, on a représenté un procédé d'émission d'un message P3 qui diffère du procédé P1 décrit sur la figure 2 en ce qu'il est mis en œuvre par le dispositif électronique mobile. Ce procédé comprend des étapes B301 à B305 qui sont analogues aux étapes A201 à A205 du procédé P1. Sur la figure 4, on a également représenté un procédé de réception d'un message P4 qui est analogue au procédé de traitement d'un message d'un message P2 décrit sur la figure 3 sauf en ce qu'il est mis en œuvre par un serveur. Le procédé P4 comporte des étapes A305 à A314 qui sont analogues aux étapes B205 à B214 décrites ci-avant.

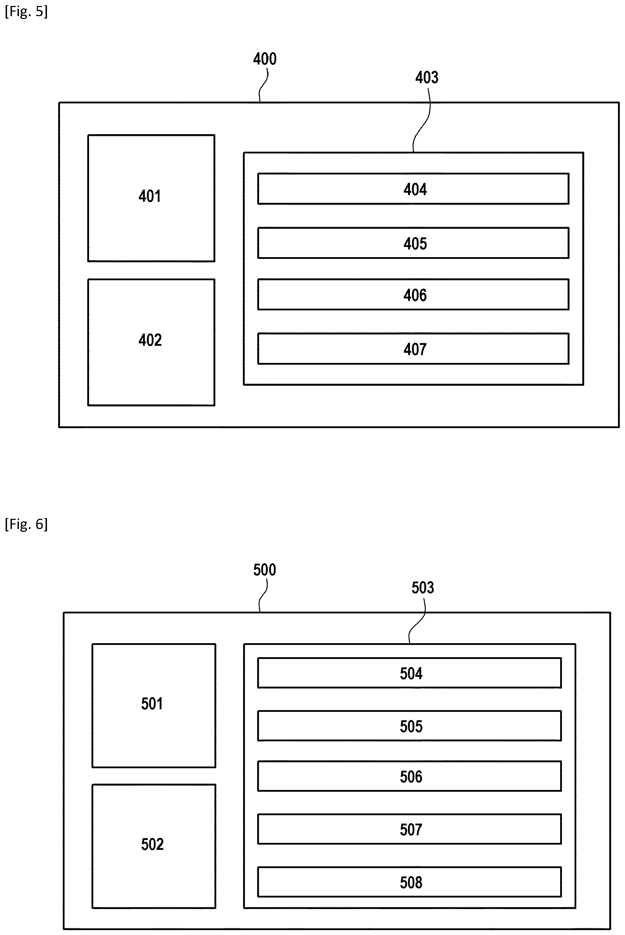

Sur la figure 5, on a représenté un dispositif électronique 400 qui peut être un serveur ou un dispositif électronique mobile tel que décrit aux figures 3 et 4.

Un dispositif électronique 400 comporte un processeur 401 et des moyens de communication 402 qui lui permettent de recevoir des messages, par exemple des messages tels que celui décrit sur la figure 1. Le processeur 401 est capable d'exécuter des instructions de programme d'ordinateur qui sont mémorisées dans une mémoire non volatile 403 du dispositif électronique 400. La mémoire non volatile 403 comporte un jeu d'instructions formant un programme d'ordinateur, ce jeu d'instructions comprenant une instruction 404, une instruction 405, une instruction 406, et une instruction 407. L'instruction 404 traite la réception d'un message et forme avec le processeur 401 un module de réception d'un message. L'instruction 405 forme avec le processeur 401 un module d'élaboration d'un indicateur complet à partir de données mémorisées dans le dispositif électronique 400 et d'un indicateur reçu dans un message. L'instruction 406 forme avec le processeur 401 un module d'élaboration d'une clé à partir de l'indicateur complet. L'instruction 407 forme avec le processeur 401 un module de déchiffrement des données chiffrées qui sont reçues dans un message en utilisant la clé.

Sur la figure 6, on a représenté un dispositif électronique 500 qui peut être un serveur ou un dispositif électronique mobile tel que décrit aux figures 3 et 4. Le dispositif électronique 500 est configuré pour l'émission de messages. Ce dispositif électrique peut également être configuré pour la réception de message et comporter les mêmes modules que le dispositif électronique 400 tel que décrit à la figure 5. Le dispositif électronique 500 comporte en particulier un processeur 501 et un module d'émission d'un message 502. Le processeur 501 est capable d'exécuter des instructions comprises dans une mémoire volatile 503. Dans la mémoire non volatile 503 on trouve des instructions de programme d'ordinateur 504 à 508. Les instructions 504 forment avec le processeur 501 un module de détermination d'un indicateur complet. L'instruction 505 forme avec le processeur 501 un module d'élaboration d'une clé à partir de l'indicateur complet. L'instruction 506 forme avec le processeur 501 un module d'élaboration d'un élément indicateur à partir de l'indicateur complet. L'instruction 507 forme avec le processeur 501 un module de chiffrement de données utilisant la clé pour obtenir des données chiffrées. L'instruction 508 forme avec le processeur 501 un module d'élaboration du message à émettre, ce message à émettre comprenant l'élément indicateur et les données chiffrées.

Les modes de mise en œuvre et de réalisation décrits ci-avant permettent d'obtenir une communication sécurisée entre des dispositifs électroniques mobiles et un serveur. Ces modes de réalisation et de mise en œuvre trouvent notamment application dans l'internet des objets. Ils permettent d'améliorer la sécurité des échanges sans consommer davantage de bande passante.

## Revendications

1. Procédé de réception d'un message mis en œuvre par un dispositif électronique, le message comprenant des données chiffrées et au moins un élément indicateur (CT0), le procédé comprenant :
- une élaboration (B207, B208, A307, A308) d'un indicateur complet (CT) à partir de données mémorisées dans le dispositif électronique et de l'élément indicateur reçu,
- une élaboration (B210, A310) d'une clé à partir d'au moins l'indicateur complet,
- un déchiffrement (B211, A311) desdites données chiffrées utilisant ladite clé.

2. Procédé selon la revendication 1, dans lequel ledit élément indicateur reçu est dans une portion non-chiffrée du message.

3. Procédé selon la revendication 1, dans lequel ledit élément indicateur reçu est dans un en-tête (HDR) non-chiffré du message reçu.

4. Procédé selon l'une quelconque des revendications 1 à 3, dans lequel si le déchiffrement ne délivre pas les données chiffrées déchiffrées en clair lorsque l'on utilise l'élément indicateur reçu, on détermine (B214, A314) une autre valeur d'élément indicateur choisie dans un groupe de valeurs prédéterminées d'élément indicateur, et on utilise cette valeur choisie pour mettre en œuvre l'élaboration de l'indicateur complet.

5. Procédé selon l'une des revendications 1 à 4, dans lequel l'indicateur complet est un compteur de messages envoyés et reçus pouvant être inscrit sur M+N bits, M et N étant des entiers non-nuls,
l'élément indicateur reçu étant une portion de N bits consécutifs,
les données mémorisées comprenant au moins une portion de M bits consécutifs,
l'élaboration de l'indicateur complet comprenant une concaténation binaire de ladite portion de M bits consécutifs avec ladite portion de N bits consécutifs, ladite portion de N bits consécutifs formant les bits de poids faible de l'indicateur complet.

6. Procédé selon les revendications 4 et 5, dans lequel le groupe de valeurs prédéterminées d'élément indicateur comporte les 2^{N}-1 valeurs possibles pouvant s'écrire sur N bits.

7. Procédé selon l'une des revendications 5 ou 6, dans lequel les données mémorisées comprennent ladite portion de M bits consécutifs, indiquant une valeur A, et une portion de N bits consécutifs, indiquant une valeur B,
ladite portion de N bits consécutifs de l'élément indicateur reçu indiquant une valeur Y,
et dans lequel si Y est strictement supérieur à B alors l'élaboration de l'indicateur complet comprend la concaténation binaire de A et Y et la mémorisation de l'indicateur complet obtenu,
sinon, l'élaboration de l'indicateur complet comprend la concaténation de A+1 et de Y.

8. Procédé selon la revendication 7, dans lequel on mémorise en tant que nouvelles données mémorisées l'indicateur complet obtenu, les anciennes données mémorisées étant alors remplacées par l'indicateur obtenu.

9. Procédé selon l'une quelconque des revendications 1 à 8, comprenant la réception (B205, A305) dudit message par une liaison sans fil à faible consommation énergétique.

10. Procédé d'émission d'un message mis en œuvre par un dispositif électronique, le procédé comprenant :
- une détermination (A201, B301) d'un indicateur complet (CT),
- une élaboration (A202, B302) d'une clé à partir d'au moins l'indicateur complet,
- une élaboration (A203, B303) d'un élément indicateur (CT0) à partir de l'indicateur complet,
- un chiffrement (A204, B304) de données utilisant ladite clé pour obtenir des données chiffrées,
dans lequel le message à émettre comprend ledit élément indicateur et lesdites données chiffrées.

11. Procédé selon la revendication 10, dans lequel ledit élément indicateur est placé dans une portion non-chiffrée du message à émettre.

12. Procédé selon la revendication 10 ou 11, dans lequel la détermination de l'indicateur complet comporte une mise à jour d'un indicateur complet mémorisé dans le dispositif électronique.

13. Procédé selon l'une des revendications 10 à 12, dans lequel l'indicateur complet est un compteur de messages envoyés et reçus pouvant être inscrit sur M+N bits, M et N étant des entiers non-nuls, l'indicateur complet comprenant, sous la forme d'une concaténation binaire, une portion de M bits consécutifs et une portion de N bits consécutifs, ladite portion de N bits consécutifs formant les bits de poids faible de l'indicateur complet et ledit élément indicateur.

14. Procédé selon l'une quelconque des revendications 10 à 13, dans lequel le message est émis par une liaison sans fil à faible consommation énergétique.

15. Dispositif électronique comprenant :
- un module de réception (401, 404) d'un message comprenant des données chiffrées et au moins un élément indicateur,
- un module d'élaboration (401, 405) d'un indicateur complet à partir de données mémorisées dans le dispositif électronique et de l'élément indicateur reçu,
- un module d'élaboration (401, 406) d'une clé à partir d'au moins l'indicateur complet,
- un module de déchiffrement (401, 407) desdites données chiffrées utilisant ladite clé.

16. Système électronique comprenant :
- un module de détermination (501, 504) d'un indicateur complet,
- un module d'élaboration (501, 505) d'une clé à partir d'au moins l'indicateur complet,
- un module d'élaboration (501, 506) d'un élément indicateur à partir de l'indicateur complet,
- un module de chiffrement (501, 507) de données utilisant ladite clé pour obtenir des données chiffrées,
- un module d'élaboration (501, 508) du message à émettre, le message à émettre comprenant ledit élément indicateur et lesdites données chiffrées,
- un module d'émission (502) du message à émettre.
